# EUROPEAN PATENT SPECIFICATION

(11) **EP 3 038 093 B1**
(45) Date of publication and mention of the grant of the patent: **26.06.2019**
(21) Application number: 15202395.8
(22) Date of filing: 23.12.2015
(51) Int. Cl.: G09G 3/32

(54) **DISPLAY DEVICE AND DRIVING METHOD THEREOF**
ANZEIGEVORRICHTUNG UND ANSTEUERUNGSVERFAHREN DAFÜR
DISPOSITIF D'AFFICHAGE ET PROCÉDÉ DE COMMANDE CORRESPONDANT

(30) Priority: 24.12.2014 KR 20140188914
(43) Date of publication of application: 29.06.2016
(73) Proprietor: LG Display Co., Ltd., Seoul 07336 (KR)
(72) Inventor: KIM, Jungjae, 10413 Gyeonggi-do (KR); HAN, Jaewon, 10419 Gyeonggi-do (KR)
(74) Representative: Ter Meer Steinmeister & Partner

(56) References cited:
- US-A1- 2011 115 832
- US-A1- 2012 327 063

## Description

This application claims the benefit of Korean Patent Application No. 10-2014-0188914, filed on December 24, 2014.

### BACKGROUND

### Field

The present disclosure relates to a display device and a driving method thereof.

### Description of the Related Art

As the information technology has advanced, the market of display devices as mediums connecting users and information has grown. In line with this, the use of display devices such as organic light emitting display devices, liquid crystal displays (LCDs), and plasma display panels (PDPs) has increased.

Some of the aforementioned display devices, for example, the LCD or the organic light emitting display device includes a display panel including a plurality of subpixels disposed in a matrix form, a driver driving the display panel, and a timing controller controlling the driver. The driver includes a scan driver supplying a scan signal (or a gate signal) to the display panel and a data driver supplying a data signal to the display panel.

The aforementioned display device displays a specific image as the display panel emits light or allows light to be transmitted therethrough on the basis of a voltage output from a power supply unit and the scan signal and the data signal output from the scan driver and the data driver.

US 2011/0115832 A1 describes a display device that includes a panel including a plurality of pixel circuits, each of the pixel circuits including a light emitting element having one end coupled to a first voltage source for supplying a first voltage and another end coupled to a second voltage source for supplying a second voltage; a controller for reducing image data for one frame and for outputting a control signal and a data signal to display an image corresponding to the reduced image data on the panel; a voltage difference setting unit for detecting a peak value of the reduced image data and for calculating a driving voltage for generating a peak driving current corresponding to the peak value; and a power supply for generating the first and second voltages and for providing the first and second voltages to the panel in accordance with the driving voltage.

US 2012/0327063 A1 describes a display device that includes a power supplying unit which outputs at least a high-side or low-side output potential; an organic EL display unit which includes pixels and receives power supply from the power supplying unit; two or more detecting lines for transmitting a high-side or low-side applied potential applied to two or more pixels; a relay unit which outputs the high-side or low-side applied potentials transmitted by the detecting lines, to output lines fewer in number than the detecting lines; and a regulating unit which regulates at least the high-side or low-side output potential to be outputted by the power supplying unit, such that any one of potential difference between a reference potential and the high-side applied potential from the relay unit, potential difference between the reference potential and the low-side applied potential, and potential difference between the high-side applied potential and the low-side applied potential reaches a predetermined potential difference.

In the related art display device, when the voltage output from the power supply unit wavers significantly due to a variation in a load and when a degree of wavering is varied according to variations of the load, horizontal crosstalk (X-talk) or an abnormal screen may be generated on a display panel. In particular, when a large number of thin film transistors (TFTs) are formed per subpixel, like for an organic light emitting diode (OLED), it is difficult to predict an amount of the horizontal crosstalk generated in the display panel, and thus, the problem is required to be resolved.

### SUMMARY

The above identified objects are solved by the features of the independent claims. Preferably, there is provided a display device including a display panel, a driver, a power supply unit, and a timing controller. The display panel may be configured to display an image. The driver may include at least one of a data driver and a scan driver for driving the display panel. The power supply unit may be configured to supply a voltage to the driver. The power supply unit may perform a compensation operation to vary an output voltage output from the power supply unit itself to correspond to a variation of a load before the load is varied. 2. The display device of claim 1, wherein the power supply unit performs a compensation operation to vary the output voltage output therefrom to correspond to a variation of a load before the load is changed on the basis of a data signal and a synchronization signal supplied from the timing controller. Preferably, the power supply unit performs a compensation operation to vary the output voltage output therefrom to correspond to a variation of a load before the load is changed on the basis of a data signal and a control signal supplied from the data driver. Preferably, the power supply unit temporarily applies a voltage for canceling out the variation in the load to an output terminal thereof before the load is changed. Preferably, the power supply unit applies a rise compensation voltage for preventing a voltage fall before a first load section in which a load current increases is generated. Preferably, the power supply unit performs a compensation operation to apply a fall compensation voltage for preventing a voltage rise before a second load section in which the load current decreases is generated. Preferably, the power supply unit comprises: a current amount analyzing unit configured to analyze and predict an output current amount according to a data signal supplied from the outside; a variation determining unit configured to determine a variation in an output voltage according to a transient current amount of the output voltage transferred from the current amount analyzing unit; and an output voltage varying unit configured to define a transient current generation section on the basis of a data signal and a synchronization signal supplied from the outside, a control signal corresponding to the synchronization signal, and the variation in the output voltage transferred from the variation determining unit, and vary the output voltage output therefrom to correspond to the variation in the load before the load is changed. Preferably the output voltage varying unit includes a look-up table for extracting and outputting a variation in the output voltage according to the transient current amount of the output voltage transferred from the current amount analyzing unit, to correspond to a predetermined value.

Preferably, there is also provided a method for driving a display device. The method for driving a display device may include: analyzing and predicting an output current amount according to a data signal; analyzing a transient current amount of an output voltage according to the output current amount; determining a variation of the output voltage according to the transient current amount; defining a generation section of the transient current on the basis of the variation of the output voltage and a synchronization signal or a control signal corresponding to the synchronization signal; and varying an output voltage of a power supply unit before the transient current is generated. Preferably, in varying the output voltage, a voltage for canceling out the transient current amount is temporarily applied to an output terminal of the power supply unit before the transient current is generated. Preferably, in varying the output voltage, a compensation operation is performed to apply a rise compensation voltage for preventing a voltage fall before a first load section in which a transient current increases is generated, and to apply a fall compensation voltage for preventing a voltage rise before a second load section in which a transient current decreases is generated. The display device according to embodiments of the present application may be configured to be driven by any one of the embodiments of the method.

### BRIEF DESCRIPTION OF THE DRAWINGS

The accompany drawings, which are included to provide a further understanding of the disclosure and are incorporated on and constitute a part of this specification illustrate embodiments of the disclosure and together with the description serve to explain the principles of the disclosure.
FIG. 1 is a block diagram schematically illustrating a display device.
FIG. 2 is a view schematically illustrating a sub-pixel illustrated in FIG. 1.
FIG. 3 is a view illustrating a configuration of a portion of a device according to a first embodiment of the present disclosure.
FIG. 4 is a view illustrating a configuration of a portion of a device according to a second embodiment of the present disclosure.
FIG. 5 is a waveform view illustrating a relationship between a load current and a power source according to a conventionally proposed scheme.
FIG. 6 is a waveform view illustrating a relationship between a load current and a power source according to an embodiment.
FIG. 7 is a view schematically illustrating a small organic light emitting display device employing the first embodiment of the present disclosure.
FIG. 8 is a flow chart illustrating a method for driving a display device according to an embodiment of the present disclosure.
FIG. 9 is a waveform view illustrating a relationship between a load current and a power source according to the driving method of FIG. 8.
FIG. 10 is a view illustrating a comparison between a conventionally proposed scheme and an embodiment.

### DETAILED DESCRIPTION OF PREFERRED EMBODIMENTS

Reference will now be made in detail embodiments of the disclosure examples of which are illustrated in the accompanying drawings.

Hereinafter, embodiments of the present disclosure will be described in detail with reference to the accompanying drawings.

A display device according to an embodiment of the present disclosure is implemented as a television, a set-top box (STB), a navigation device, a video player, a Blu-ray player, a personal computer (PC), a home theater, and a mobile phone. As a display panel of the display device, a liquid crystal display panel, an organic light emitting display panel, an electrophoretic display panel, or a plasma display panel may be selected, but the present disclosure is not limited thereto. However, hereinafter, for the purposes of descriptions, the organic light emitting display device will be described as an example.

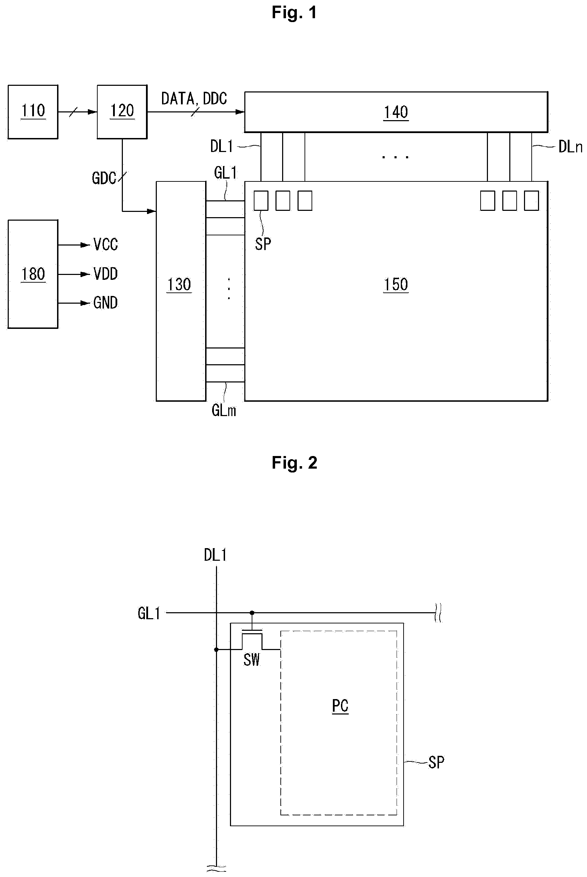

FIG. 1 is a block diagram schematically illustrating a display device, and FIG. 2 is a view schematically illustrating a sub-pixel illustrated in FIG. 1.

As illustrated in FIG. 1, the display device includes an image supply unit 110, a timing controller 120, a scan driver 130, a data driver 140, a display panel 150, and a power supply unit 180.

The image supply unit 110 processes a data signal and outputs the data signal together with a vertical synchronization signal, a horizontal synchronization signal, a data enable signal, and a clock signal. The image supply unit 110 supplies the vertical synchronization signal, the horizontal synchronization signal, the data enable signal, the clock signal, and the data signal to the timing controller 120 through a low voltage differential signaling (LVDS) interface or a transition minimized differential signaling (TMDS) interface.

The timing controller 120 receives a data signal DATA, or the like, from the image supply unit 110 and outputs a gate timing control signal GDC for controlling an operation timing of the scan driver 130 and a data timing control signal DDC for controlling an operation timing of the data driver 140.

The timing controller 120 outputs a data signal DATA together with the gate timing control signal GDC and the data timing control signal DDC through a communication interface, and controls an operation timing of the scan driver 130 and the data driver 140.

In response to the gate timing control signal GDC supplied from the timing controller 120, the scan driver 130 outputs a scan signal (or a gate signal), while shifting a level of a gate voltage. The scan driver 130 includes a level shifter and a shift register.

The scan driver 130 supplies a scan signal to subpixels SP included in the display panel 150 through scan lines GL1 to GLm. The scan driver 130 may be formed as an integrated circuit (IC) or formed in a gate-in-panel manner on the display panel 150. A part formed in the gate-in-panel manner in the scan driver 130 is the shift register.

In response to the data timing control signal DDC supplied from the timing controller 120, the data driver 140 samples and latches the data signal DATA, converts an analog signal into a digital signal according to a gamma reference voltage, and outputs the converted digital signal.

The data driver 140 supplies the data signal DATA to the subpixels SP included in the display panel 150 through data lines DL1 to DLn. The data driver 140 is formed as an integrated circuit (IC).

The power supply unit 180 generates and outputs voltages such as a first source voltage VDD, a second source voltage VCC, and a low potential voltage GND. The voltages output from the power supply unit 180 are discriminately supplied to the timing controller 120, the scan driver 130, the data driver 140, and the display panel 150.

In response to the scan signal supplied from the scan driver 130 and the data signal DATA supplied from the data driver 140, the display panel 150 displays an image. The display panel 150 includes subpixels SP.

As illustrated in FIG. 2, a single subpixel includes a switching thin film transistor (TFT) SW connected to the scan line GL1 and the data line DL1 (or formed in an intersection between the scan line GL1 and the data line DL1), and a pixel circuit PC operated in response to the data signal DATA supplied through the switching TFT SW. The subpixels SP are configured as a liquid crystal display panel including a liquid crystal element or an organic light emitting display panel including an organic light emitting element according to a configuration of the pixel circuit PC.

When the display panel 150 is configured as a liquid crystal display panel, the display panel 150 may be implemented in a twisted nematic (TN) mode, a vertical alignment (VA) mode, an in-plane switching (IPS) mode, a fringe field switching (FFS) mode, or an electrically controlled birefringence (ECB) mode. When the display panel 150 is configured as an organic light emitting display panel, the display panel 150 is implemented according to a top-emission scheme, a bottom-emission scheme, or a dual-emission scheme.

The display device described above displays a specific image as the display panel 150 emits light or allows light to be transmitted therethrough on the basis of a voltage output from the power supply unit 180 and the scan signal and the data signal DATA output from the scan driver 130 and the data driver 140.

In the related art display device, when the voltage output from the power supply unit wavers significantly due to a variation in a load and when a degree of wavering is varied according to variations of the load, horizontal crosstalk (X-talk) may be generated on the display panel. In particular, when a large number of thin film transistors (TFTs) are formed per subpixel, like in case of an organic light emitting diode (OLED), it is more difficult to predict an amount of the horizontal crosstalk generated in the display panel,

In the related art, in order to solve the foregoing problem, a scheme of adding an output capacitor to an output terminal of the power supply unit has been proposed. However, the proposed scheme may be able to alleviate the foregoing problem by using a load capacitor, but cannot completely eliminate a root cause of the problem. In addition, the proposed scheme causes an increase in cost due to the addition of the load capacitor, and also, an effect thereof is not great according to design schemes (type/size of a display panel, etc.) of a load.

Hereinafter, an apparatus and a method for improving the aforementioned problem will be described.

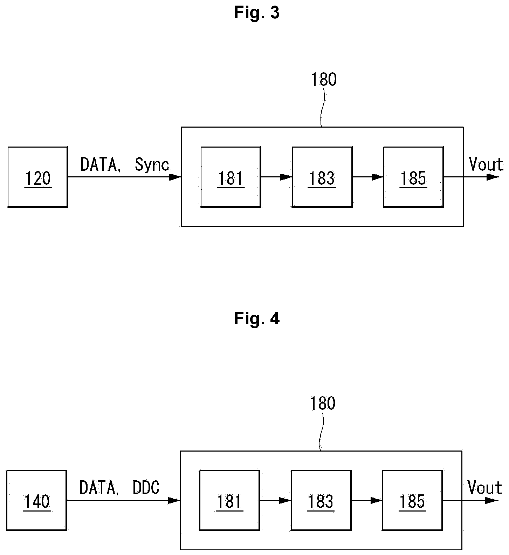

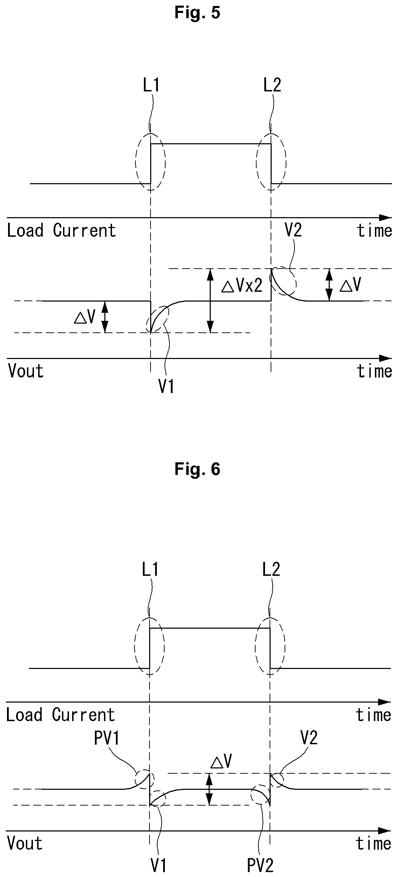

FIG. 3 is a view illustrating a configuration of a portion of a device according to a first embodiment of the present disclosure, FIG. 4 is a view illustrating a configuration of a portion of a device according to a second embodiment of the present disclosure, FIG. 5 is a waveform view illustrating a relationship between a load current and a power source according to a conventionally proposed scheme, and FIG. 6 is a waveform view illustrating a relationship between a load current and a power source according to an embodiment.

As illustrated in FIG. 3, in the first embodiment of the present disclosure, the timing controller 120 and the power supply unit 180 work with each other. The power supply unit 180 varies an output voltage Vout output therefrom on the basis of the data signal DATA and a synchronization signal Sync supplied from the timing controller 120.

In detail, the power supply unit 180 previously receives device information DATA and Sync from the timing controller 120, and analyzes and predicts a variation amount of the voltage Vout to be output from the power supply unit 180 in advance on the basis of the received device information DATA and Sync. In order to reduce an amount of a transient voltage due to a change in a load, the power supply unit 180 varies the output voltage Vout on the basis of the predicted variation amount of voltage before the load is changed.

The power supply unit 180 includes a current amount analyzing unit 181, a variation amount determining unit 183, and an output voltage varying unit 185. The power supply unit 180 may further include other circuit blocks (a communication interface, a control circuit, etc.), but these circuits are unrelated to the gist of the present disclosure, and thus, omitted.

On the basis of the data signal DATA supplied from the timing controller 120, the current amount analyzing unit 181 analyzes and predicts an output current amount according to the data signal DATA. The current amount analyzing unit 181 analyzes and predicts a transient current amount of the output voltage according to the output current amount. The current amount analyzing unit 181 delivers the analyzed and predicted transient current amount of the output voltage to the variation amount determining unit 183.

On the basis of the transient current amount of the output voltage delivered from the current amount analyzing unit 181, the variation amount determining unit 183 determines a variation amount of the output voltage according to the transient current amount. The variation amount determining unit 183 may configure the variation amount of the output voltage according to the transient current amount in the form of data such as a look-up table, or the like, from which the variation amount of the output voltage according to the transient current amount may be extracted and output according to a predetermined value. The variation amount determining unit 183 delivers the extracted variation amount of the output voltage to the output voltage varying unit 185.

On the basis of the data signal DATA and the synchronization signal Sync supplied from the timing controller 120 and the variation amount of the output voltage delivered from the variation amount determining unit 183, the output voltage varying unit 185 defines a transient current generation section (or a generation point in time). That is, the transient current generation section denotes a time, during which the transient current will occur. On the basis of the transient current generation section, i.e. before the determined section (or time), the output voltage varying unit 185 varies the output voltage Vout of the power supply unit 180 before a transient voltage is generated (or before a load is changed).

As illustrated in FIG. 4, in a second embodiment of the present disclosure, the data driver 140 and the power supply unit 180 work with each other. The power supply unit 180 varies the voltage Vout output therefrom on the basis of the data signal DATA and the data timing control signal DDC supplied from the data driver 140.

In detail, the power supply unit 180 previously receives device information DATA and DDC from the data driver 140 and analyzes and predicts a variation amount of the voltage Vout to be output from the power supply unit 180 in advance on the basis of the received device information DATA and DDC. In order to reduce an amount of a transient voltage due to a change in a load, the power supply unit 180 varies the output voltage Vout on the basis of the predicted variation amount of voltage before the load is changed. Here, load may refer to dynamic load, e.g. of the display panel, driver-IC, etc., which are connected to the power supply unit. Thus, the power supply unit 180 may vary the output voltage Vout on the basis of the predicted variation amount of voltage before the load is changed.

The data timing control signal DDC includes a source start pulse (SSP), a source sampling clock (SSC), a polarity control signal POL, a source output enable signal SOE, and the like. The source start pulse is a signal for controlling a data sampling start point of the data driver 140. The source sampling clock is a signal for controlling a sampling operation of data within the data driver 140 with respect to a rising or falling edge. The polarity control signal is a signal for controlling a polarity of a data voltage. The source output enable signal is a signal for controlling an output of the data driver 140.

The data timing control signal DDC output from the data driver 140 may also include a signal for detecting a section, in which a load is changed by the synchronization signal Sync output from the timing controller 120 (or a signal capable of synchronizing an output point of power). Hereinafter, among signals output from the data driver 140, the data timing control signal DDC will be described as an example of a signal allowing to recognize a section in which a load is changed. However, a name or a definition of a signal enabling to detect a section in which a load is changed may be varied according to devices.

The power supply unit 180 includes a current amount analyzing unit 181, a variation amount determining unit 183, and an output voltage varying unit 185. The power supply unit 180 may further include other circuit blocks (a communication interface, a control circuit, etc.), but these circuits are unrelated to the gist of the present disclosure, and thus, omitted.

On the basis of the data signal DATA supplied from the data driver 140, the current amount analyzing unit 181 analyzes and predicts an output current amount according to the data signal DATA. The current amount analyzing unit 181 analyzes and predicts a transient current amount of the output voltage according to an output current amount. The current amount analyzing unit 181 delivers the analyzed and predicted transient current amount of the output voltage to the variation amount determining unit 183.

On the basis of the transient current amount of the output voltage delivered from the current amount analyzing unit 181, the variation amount determining unit 183 determines a variation amount of the output voltage according to the transient current amount. The variation amount determining unit 183 may configure the variation amount of the output voltage according to the transient current amount in the form of data such as a look-up table, or the like, from which the variation amount of the output voltage according to the transient current amount may be extracted and output according to a predetermined value. The variation amount determining unit 183 delivers the extracted variation amount of the output voltage to the output voltage varying unit 185.

On the basis of the data signal DATA and the data timing control signal DDC supplied from the data driver 140 and the variation amount of the output voltage delivered from the variation amount determining unit 183, the output voltage varying unit 185 defines a transient current generation section. On the basis of the transient current generation section, the output voltage varying unit 185 varies the output voltage Vout of the power supply unit 180 before a transient voltage is generated (or before a load is changed), i.e. preferably the output voltage to the Data Driver (140) and the Gate Driver (130) .

Meanwhile, in order to vary the output voltage Vout, a method of varying an input voltage applied to a reference voltage Ref of an error amplifier of a DC/DC conversion unit present within the power supply unit 180 may also be used.

### [Related art example]

As illustrated in FIG. 5, with the conventionally proposed scheme, it is difficult to directly vary the output voltage Vout output from the power supply unit according to a change in a load current. On this account, the conventionally proposed scheme has a problem in which the output voltage Vout output from the power supply unit wavers in sections L1 and L2 in which a load current is rapidly changed.

For example, the output voltage Vout output from the power supply unit has a voltage fall section V1 in which a level thereof falls ΔV to correspond to the first load section L1 in which the load current increases, and thereafter, maintains a normal level. In another example, the output voltage Vout output from the power supply unit has a voltage rise section V2 in which a level thereof rises by ΔV to correspond to the second load section L2 in which the load current decreases, and thereafter, maintains a normal level.

In the conventionally proposed scheme, due to the generation of the transient currents changed from the load current as in the first load section L1 or the second load section L2, the output voltage Vout output from the power supply unit forms a transient voltage ΔVx2 by a generation amount of a transient current and wavers.

Thus, when the output voltage Vout output from the power supply unit significantly wafers due to a change in the load and when the degree of wavering is varied according to a variation in the load, horizontal crosstalk (X-talk) may be generated in the display panel.

### [Embodiment]

As illustrated in FIG. 6, in a scheme according to an embodiment, the output voltage Vout output from the power supply unit may be directly varied before the load current is changed. Thus, the scheme according to the embodiment may prevent a problem in which the output voltage Vout output from the power supply unit wavers in the sections L1 and L2 in which the load current rapidly changes.

For example, the output voltage Vout output from the power supply unit has a voltage fall preventing section PV1 in which a voltage rises for a predetermined period of time in advance to cope with generation of the first load section L1 in which the load current increases. Due to the compensation voltage such as the voltage fall preventing section PV1, a fall width of the voltage fall section V1 in which a voltage falls to correspond to the first load section L1 is improved (compensated for or canceled out), and thereafter, the output voltage Vout output from the power supply unit maintains a normal level.

In another example, the output voltage Vout output from the power supply unit has a voltage rise preventing section PV2 in which a voltage falls during a predetermined period of time in advance to cope with generation of the second load section L2 in which the load current decreases. Due to the compensation voltage such as the voltage rise preventing section PV2, a rise width of the voltage rise section V2 in which a voltage rises to correspond to the second load section L2 is improved (compensated for or canceled out), and thereafter, the output voltage Vout output from the power supply unit maintains a normal level.

In the scheme according to the embodiment, even when the transient current is generated as the load current is changed like the first load section L1 or the second load section L2, the output voltage Vout output from the power supply unit is compensated and canceled out beforehand. Thus, the scheme according to the embodiment may lower a generation amount (ΔV) of the transient voltage, compared with the conventionally proposed scheme.

In this manner, in the scheme according to the embodiment, before the load is changed, a compensation operation of temporarily applying a voltage for canceling out a variation of the load to the output terminal of the power supply unit is performed. When a variation amount of the output voltage Vout output from the power supply unit according to a change in the load is improved in the compensation operation, horizontal crosstalk (X-talk) generated in the display panel may be resolved or improved.

Meanwhile, as for the aforementioned problem, when a large number of thin film transistors (TFTs) are formed per subpixel, like for an organic light emitting diode (OLED), it is difficult to predict an amount of the horizontal crosstalk generated in the display panel. Also, when the problem appears in a small display device (e.g., a mobile device or a smartphone), the problem in which horizontal crosstalk or an abnormal screen appears on a display panel is aggravated. Thus, the present disclosure is more effective when applied to a small display device having a configuration described hereinafter.

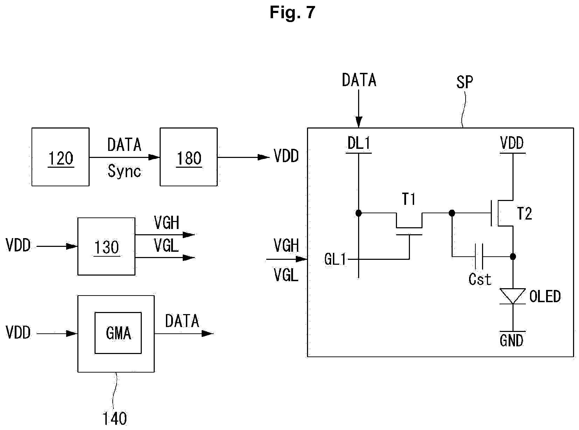

FIG. 7 is a view schematically illustrating a small organic light emitting display device employing the first embodiment of the present disclosure. A small organic light emitting display device, which has not been described but is described hereinafter, may also be applied to a second embodiment.

As illustrated in FIG. 7, the small organic light emitting display device may include a timing controller 120, a scan driver 130, a data driver 140, and a power supply unit 180. As for a display panel, in order to help understand the present disclosure, a single subpixel (SP) will be described.

In the small organic light emitting display device, the scan driver 130 and the data driver 140 operate on the basis of a first source voltage VDD output from the power supply unit 180. In detail, the scan driver 130 generates scan signals corresponding to a gate high voltage VGH and a gate low voltage VGL using a first source voltage VDD output from the power supply unit 180.

The data driver 140 uses the first source voltage VDD output from the power supply unit 180, as a reference voltage of a gamma unit GMA provided therein or outside, and converts an analog data signal into a digital data signal DATA according to a gamma reference voltage, and outputs the converted data signal.

The scan signals corresponding to the gate high voltage VGH and the gate low voltage VGL output from the scan driver 130 are supplied to a first transistor T of the subpixel SP through the scan line GL1. The data signal DATA output from the data driver 140 is stored as a data voltage in a capacitor Cst through the data line DL1 and the first transistor T1.

A second transistor T2 generates a driving current based on the data voltage stored in the capacitor Cst, and an OLED emits light in response to a driving current flowing through a first source voltage line VDD and a low potential voltage line GN.

Due to the foregoing configuration of the small organic light emitting display device, the scan signals corresponding to the gate high voltage VGH and the gate low voltage VGL periodically cause a change in a load according to 1 horizontal period H. Also, in the case of the data signal DATA, a charge amount (data voltage) charged in the capacitor Cst within the display panel is varied by horizontal periods. That is, the changed load may include both a scan line and a data line of the display panel. The reason for this is because the first source voltage VDD (voltage output from the power supply unit) supplied to the scan driver 130 and the data driver 140 according to 1 horizontal period may be rapidly changed.

Here, when the output voltage of the power supply unit wavers (is varied) considerably according to a change in a load as in the conventionally proposed scheme, the drivers 130 and 140 operated on the output voltage from the power supply unit are also affected. As a result, in a case in which the small organic light emitting display device is implemented according to the conventionally proposed scheme, the problem in which horizontal crosstalk or an abnormal screen appears on the display panel may be aggravated.

Meanwhile, in the small organic light emitting display device employing the first embodiment of the present disclosure, the power supply unit 180 performs a compensation operation in response to signals (DATA and Sync) output from the timing controller 120.

As discussed above, the power supply unit 180 performs a compensation operation to vary the output voltage Vout to correspond to a variation of a load before the load is changed. As a result, when the small organic light emitting display device is implemented according to the scheme of the first embodiment, the problem in which horizontal crosstalk or an abnormal screen appears on the display panel may be improved or prevented.

Hereinafter, a method for driving a display device according to an embodiment of the present disclosure will be described.

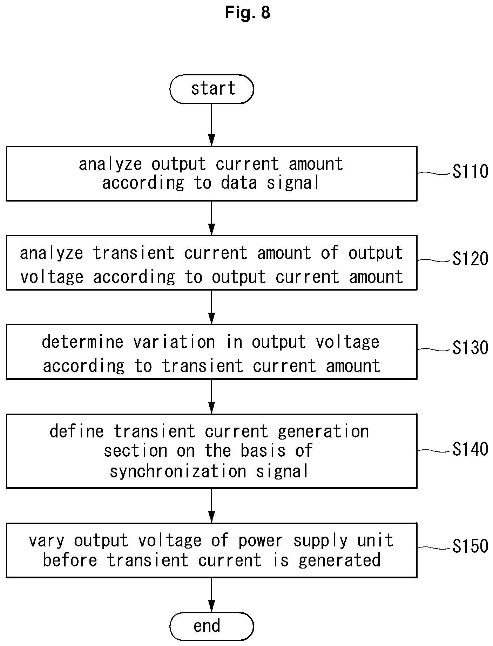

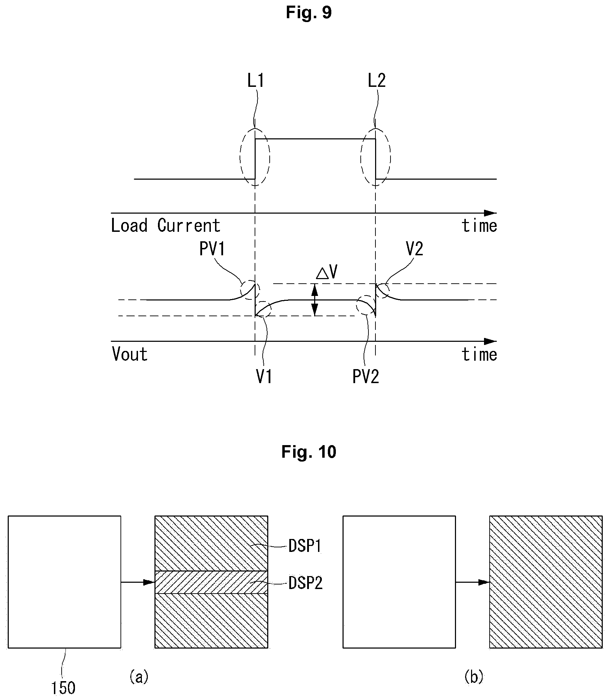

FIG. 8 is a flow chart illustrating a method for driving a display device according to an embodiment of the present disclosure, FIG. 9 is a waveform view illustrating a relationship between a load current and a power source according to the driving method of FIG. 8, and FIG. 10 is a view illustrating a comparison between a conventionally proposed scheme and an embodiment.

As illustrated in FIGS. 8 through 10, in the method for driving a display device according to an embodiment of the present disclosure, an output voltage output from a power supply unit is directly varied before a load current is changed. A flow of the driving method thereof will be described hereinafter.

First, an output current amount according to a data signal is analyzed (S110). The power supply unit analyzes and predicts a transient current amount of the output voltage according to an output current amount on the basis of a data signal supplied from a timing controller or a data driver. This may be performed by a current amount analyzing unit included in the power supply unit, but the present disclosure is not limited thereto.

Next, the transient current amount of the output voltage according to the output current amount is analyzed (S120). The power supply unit analyzes the transient current amount of the output voltage on the basis of the output current amount. This may be performed by a current amount analyzing unit included in the power supply unit, but the present disclosure is not limited thereto.

Thereafter, a variation of the output voltage according to the transient current amount is determined (S130). The power supply unit determines a variation of the output voltage according to the transient current amount on the basis of the transient current amount. This may be performed by a variation determining unit included in the power supply unit, but the present disclosure is not limited thereto.

Thereafter, a transient current generation section is defined on the basis of a synchronization signal (S140). The power supply unit defines the transient current generation section (or generation time) on the basis of a synchronization signal (and/or a control signal) supplied from the timing controller (and/or the data driver) and the variation of the output voltage. This may be performed by an output voltage varying unit included in the power supply unit, but the present disclosure is not limited thereto.

Thereafter, the output voltage of the power supply unit is varied before a transient current is generated (S150). The power supply unit varies the output voltage thereof on the basis of the synchronization signal (or the control signal) supplied from the timing controller (or the data driver) before a transient current is generated.

In other words, according to the embodiments, the power supply unit may be configured to determine a current amount, that should be output by itself in near future (output current amount), based on a data signal, and to predict a current variation (transient current amount) caused by a load variation with respect to the present situation. The predicted current variation may be used for determining a variation amount of the output voltage. Further, the power supply unit may be configured to determine a point in time, during which the current variation will occur, using one or more of signals, such as the synchronization signal, the data signal or the data timing control signal. Then, the power supply unit may be configured to just apply the voltage variation amount to the output voltage, before this point in time. Also, the variation amount of the output voltage may be considered for the timing of the compensation, i.e. the timing of applying the voltage variation amount to the output voltage. If the voltage variation amount is very large, the timing may be earlier for sufficient compensation at the time of the load variation.

The output voltage output from the power supply unit is varied according to the foregoing driving scheme as follows.

For example, the output voltage Vout output from the power supply unit has a voltage fall preventing section PV1 (or a rise compensation voltage application section) in which a voltage rises for a predetermined period of time in advance to cope with generation of the first load section L1 in which the load current increases. Due to the compensation voltage such as the voltage fall preventing section PV1, a fall width of the voltage fall section V1 in which a voltage falls to correspond to the first load section L1 is improved (compensated for or canceled out), and thereafter, the output voltage Vout output from the power supply unit maintains a normal level.

In another example, the output voltage Vout output from the power supply unit has a voltage rise preventing section PV2 (or a fall compensation voltage application section) in which a voltage falls during a predetermined period of time in advance to cope with generation of the second load section L2 in which the load current (or a transient current) decreases. Due to the compensation voltage such as the voltage rise preventing section PV2, a rise width of the voltage rise preventing section V2 in which a voltage rises to correspond to the second load section L2 is improved (compensated for or canceled out), and thereafter, the output voltage Vout output from the power supply unit maintains a normal level.

In the scheme according to the embodiment, even when the transient current is generated as the load current is changed like in the first load section L1 or the second load section L2, the output voltage Vout output from the power supply unit is compensated and canceled out beforehand. Thus, the scheme according to the embodiment may lower a generation amount (ΔV) of the transient current, compared with the conventionally proposed scheme.

In the conventionally proposed scheme, as illustrated in (a) of FIG. 10, when a load current is (rapidly) changed, horizontal crosstalk (X-talk) or an abnormal screen (a difference in brightness between DSP1 and DSP2 or flickering) appears on the display panel 150.

In contrast, in the scheme according to the embodiment, as illustrated in (b) of FIG. 10, even though a load current is (rapidly) changed, a problem in which horizontal crosstalk (X-talk) or an abnormal screen (a difference in brightness between DSP1 and DSP2 or flickering) appears on the display panel 150 is resolved.

As described above, according to an embodiment of the present disclosure, transient current characteristics of a voltage is improved by reducing wavering of the voltage due to a change in a load, thus enhancing display quality. Also, since the present disclosure is advantageous to improvement of horizontal crosstalk (X-talk), capacity of an output capacitor of a circuit block (DC/DC conversion unit) added to improve the horizontal crosstalk (X-talk) can be reduced, reducing manufacturing cost.

## Claims

1. A display device comprising:
a display panel (150) configured to display an image;
a driver including a data driver (140) for driving the display panel;
a power supply unit (180) configured to supply an output voltage (Vout); and
a timing controller (120) configured to control the driver,
wherein the power supply unit (180) is configured to vary the output voltage (Vout) corresponding to a variation of a load for compensating a voltage variation caused by the variation of the load, before the load is changed;
**characterised in that** the power supply unit 180 comprises a current amount analyzing unit (181), a variation amount determining unit (183), and an output voltage varying unit (185), and is configured to receive a data signal (DATA) from the timing controller (120) or the data driver (140), and is configured to receive a timing signal (Sync, DDC) from the timing controller (120) or the data driver (140), wherein the current amount analyzing unit (181) is configured to analyze and predict an output current amount according to the data signal (DATA), analyze and predict a transient current amount of the output voltage according to the output current amount, and deliver the analyzed and predicted transient current amount of the output voltage to the variation amount determining unit (183); wherein the variation amount determining unit (183) is configured to determine a variation amount of the output voltage according to the transient current amount and deliver the determined variation amount of the output voltage to the output voltage varying unit (185); wherein the output voltage varying unit (185) is configured to, on the basis of the data signal (DATA) and the timing signal (Sync, DDC) and the variation amount of the output voltage, determine a transient current generation section which denotes a time during which the transient current will occur, and to vary the output voltage (Vout) by the determined variation amount of the output voltage before the transient current generation section.

2. The display device of claim 1, wherein the output voltage (Vout) is varied to be increased and/or reduced .

3. The display device of claim 1, wherein the power supply unit (180) is configured to determine a time for varying the output voltage (Vout) temporarily on the basis of at least one of the signals.

4. The display device according to any one of the preceding claims, wherein the variation determining unit (183) includes a look-up table for extracting and outputting the variation in the output voltage (Vout) according to the transient current amount of the output voltage (Vout) transferred from the current amount analyzing unit (181).

5. A method of driving a display device according to one of the preceding claims for compensating a power variation caused by a variation of a load, the method comprising:
analyzing (S110) and predicting a current amount according to a data signal (DATA);
analyzing (S120) a transient current amount of an output voltage (Vout) according to the output current amount;
determining (S130) a variation in the output voltage (Vout) according to the transient current amount;
defining (S140) a transient current generation section on the basis of the variation in the output voltage (Vout) and on the basis of at least one signal of a synchronization signal (SYNC), a data signal (DATA) and a data timing control signal (DDC); and
varying (S150) the output voltage (Vout) of the power supply unit (180) according to the variation of the load before a transient current is generated.

6. The method of claim 5, wherein, in varying (S150) the output voltage (Vout), a compensation operation is performed in which a voltage for canceling out the transient current amount is temporarily applied to an output terminal of the power supply unit (180) before the transient current is generated.

## Patentansprüche

1. Anzeigevorrichtung, die Folgendes umfasst:
eine Anzeigetafel (150), die konfiguriert ist, ein Bild anzuzeigen;
eine Ansteuerung, die eine Datenansteuerung (140) zum Ansteuern der Anzeigetafel enthält;
eine Stromversorgungseinheit (180), die konfiguriert ist, eine Ausgangsspannung (Vout) zu liefern; und
eine Zeitsteuereinheit (120), die konfiguriert ist, die Ansteuerung zu steuern,
wobei die Stromversorgungseinheit (180) konfiguriert ist, die Ausgangsspannung (Vout) entsprechend einer Variation einer Last zum Kompensieren einer Spannungsvariation, die durch die Variation der Last verursacht wird, zu variieren, bevor die Last geändert wird;
**dadurch gekennzeichnet, dass** die Stromversorgungseinheit 180 eine Strombetragsanalyseeinheit (181), eine Variationsbetragsbestimmungseinheit (183) und eine Ausgangsspannungsvariationseinheit (185) umfasst und konfiguriert ist, ein Datensignal (DATA) von der Zeitsteuereinheit (120) oder der Datenansteuerung (140) zu empfangen, und konfiguriert ist, ein Zeitsignal (Sync, DDC) von der Zeitsteuereinheit (120) oder der Datenansteuerung (140) zu empfangen, wobei die Strombetragsanalyseeinheit (181) konfiguriert ist, einen Ausgangsstrombetrag gemäß dem Datensignal (DATA) zu analysieren und vorherzusagen, einen vorübergehenden Strombetrag der Ausgangsspannung gemäß dem Ausgangsstrombetrag zu analysieren und vorherzusagen und den analysierten und vorhergesagten vorübergehenden Strombetrag der Ausgangsspannung an die Variationsbetragsbestimmungseinheit (183) zu liefern; wobei die Variationsbetragsbestimmungseinheit (183) konfiguriert ist, einen Variationsbetrag der Ausgangsspannung gemäß dem vorübergehenden Strombetrag zu bestimmen und den bestimmten Variationsbetrag der Ausgangsspannung an die Ausgangsspannungsvariationseinheit (185) zu liefern; wobei die Ausgangsspannungsvariationseinheit (185) konfiguriert ist, anhand des Datensignals (DATA) und des Zeitsignals (Sync, DDC) und des Variationsbetrags der Ausgangsspannung einen vorübergehenden Stromerzeugungsabschnitt zu bestimmen, der eine Zeit bezeichnet, während der der vorübergehende Strom auftreten wird, und die Ausgangsspannung (Vout) um den bestimmten Variationsbetrag der Ausgangsspannung vor dem vorübergehenden Stromerzeugungsabschnitt zu variieren.

2. Anzeigevorrichtung nach Anspruch 1, wobei die Ausgangsspannung (Vout) variiert wird, um erhöht und/oder verringert zu werden.

3. Anzeigevorrichtung nach Anspruch 1, wobei die Stromversorgungseinheit (180) konfiguriert ist, eine Zeit zum Variieren der Ausgangsspannung (Vout) temporär anhand mindestens eines der Signale zu bestimmen.

4. Anzeigevorrichtung nach einem der vorhergehenden Ansprüche, wobei die Variationsbestimmungseinheit (183) zum Extrahieren und Ausgeben der Variation der Ausgangsspannung (Vout) gemäß dem vorübergehenden Strombetrag der Ausgangsspannung (Vout), die von der Strombetragsanalyseeinheit (181) übertragen wird, eine Nachschlagtabelle enthält.

5. Verfahren zum Ansteuern einer Anzeigevorrichtung nach einem der vorhergehenden Ansprüche zum Kompensieren einer Leistungsvariation, die durch eine Variation einer Last verursacht wird, wobei das Verfahren Folgendes umfasst:
Analysieren (S110) und Vorhersagen eines Strombetrags gemäß einem Datensignal (DATA);
Analysieren (S120) eines vorübergehenden Strombetrags einer Ausgangsspannung (Vout) gemäß dem Ausgangsstrombetrag;
Bestimmen (S130) einer Variation der Ausgangsspannung (Vout) gemäß dem vorübergehenden Strombetrag;
Definieren (S140) eines vorübergehenden Stromerzeugungsabschnitts anhand der Variation der Ausgangsspannung (Vout) und anhand mindestens eines Signals eines Synchronisationssignals (SYNC), eines Datensignals (DATA) und eines Datenzeitsteuersignals (DDC); und
Variieren (S150) der Ausgangsspannung (Vout) der Stromversorgungseinheit (180) gemäß der Variation der Last, bevor ein vorübergehender Strom erzeugt wird.

6. Verfahren nach Anspruch 5, wobei beim Variieren (S150) der Ausgangsspannung (Vout) ein Kompensationsvorgang ausgeführt wird, in dem eine Spannung zum Aufheben des vorübergehenden Strombetrags vorübergehend an einen Ausgangsanschluss der Stromversorgungseinheit (180) angelegt wird, bevor der vorübergehende Strom erzeugt wird.

## Revendications

1. Dispositif d'affichage comprenant :
un panneau d'affichage (150) configuré pour l'affichage d'une image ;
un circuit d'attaque incluant un circuit d'attaque de données (140) pour le pilotage du panneau d'affichage ;
une unité d'alimentation électrique (180) configurée pour l'alimentation d'une tension de sortie (Vout) ; et
un organe de commande de timing (120) configuré pour la commande du circuit d'attaque,
dans lequel l'unité d'alimentation électrique (180) est configurée pour la variation de la tension de sortie (Vout) correspondant à une variation d'une charge pour la compensation d'une variation de tension provoquée par la variation de la charge, avant le changement de la charge ;
**caractérisé en ce que** l'unité d'alimentation électrique (180) comprend une unité d'analyse de quantité de courant (181), une unité de détermination de quantité de variation (183), et une unité de variation de tension de sortie (185), et est configurée pour la réception d'un signal de données (DATA) en provenance de l'organe de commande de timing (120) ou du circuit d'attaque de données (140), et est configurée pour la réception d'un signal de timing (Sync, DDC) en provenance de l'organe de commande de timing (120) ou du circuit d'attaque de données (140), dans lequel l'unité d'analyse de quantité de courant (181) est configurée pour l'analyse et la prédiction d'une quantité de courant de sortie en fonction du signal de données (DATA), l'analyse et la prédiction d'une quantité de courant transitoire de la tension de sortie en fonction de la quantité de courant de sortie, et la livraison de la quantité de courant transitoire analysée et prédite de la tension de sortie à l'unité de détermination de quantité de variation (183) ; dans lequel l'unité de détermination de quantité de variation (183) est configurée pour la détermination d'une quantité de variation de la tension de sortie en fonction de la quantité de courant transitoire et la livraison de la quantité de variation déterminée de la tension de sortie à l'unité de variation de tension de sortie (185); dans lequel l'unité de variation de tension de sortie (185) est configurée pour, sur la base du signal de données (DATA) et du signal de timing (Sync, DDC) et de la quantité de variation de la tension de sortie, la détermination d'une section de génération de courant transitoire indiquant un temps pendant lequel le courant transitoire survient, et la variation de la tension de sortie (Vout) par la quantité de variation déterminée de la tension de sortie avant la section de génération de courant transitoire.

2. Dispositif d'affichage selon la revendication 1, dans lequel la tension de sortie (Vout) est variée pour être augmentée et/ou réduite.

3. Dispositif d'affichage selon la revendication 1, dans lequel l'unité d'alimentation électrique (180) est configurée pour la détermination d'un temps de variation provisoire de la tension de sortie (Vout) sur la base d'au moins l'un des signaux.

4. Dispositif d'affichage selon l'une quelconque des revendications précédentes, dans lequel l'unité de détermination de variation (183) inclut une table de consultation pour l'extraction et la délivrance de la variation de la tension de sortie (Vout) en fonction de la quantité de courant transitoire de la tension de sortie (Vout) transférée depuis l'unité d'analyse de quantité de courant (181).

5. Procédé de pilotage d'un dispositif d'affichage selon l'une des revendications précédentes pour la compensation d'une variation de puissance provoquée par une variation d'une charge, le procédé comprenant :
l'analyse (S110) et la prédiction d'une quantité de courant en fonction d'un signal de données (DATA) ;
l'analyse (S120) d'une quantité de courant transitoire d'une tension de sortie (Vout) en fonction de la quantité de courant de sortie ;
la détermination (S130) d'une variation de la tension de sortie (Vout) en fonction de la quantité de courant transitoire ;
la définition (S140) d'une section de génération de courant transitoire sur la base de la variation de la tension de sortie (Vout) et sur la base d'au moins un signal parmi un signal de synchronisation (SYNC), un signal de données (DATA) et un signal de commande de timing de données (DDC) ; et
la variation (S150) de la tension de sortie (Vout) de l'unité d'alimentation électrique (180) en fonction de la variation de la charge avant la génération d'un courant transitoire.

6. Procédé selon la revendication 5, dans lequel, à la variation (S150) de la tension de sortie (Vout), il est effectué une opération de compensation dans laquelle une tension pour la suppression de la quantité de courant transitoire est provisoirement appliquée à une borne de sortie de l'unité d'alimentation électrique (180) avant la génération du courant transitoire.
